# EUROPEAN PATENT APPLICATION

(11) **EP 4 593 146 A1**
(43) Date of publication of application: **30.07.2025**
(21) Application number: 23886376.5
(22) Date of filing: 03.11.2023
(51) Int. Cl.: H01M 10/0567, H01M 10/0569, H01M 4/58, H01M 4/36, H01M 4/62, H01M 10/0525, H01M 4/02

(54) **LITHIUM SECONDARY BATTERY**

(30) Priority: 04.11.2022 KR 20220146437
(71) Applicant: LG Energy Solution, Ltd., Seoul 07335 (KR)
(72) Inventor: HAN, Jun Hyeok, Daejeon 34122 (KR); LEE, Chul Haeng, Daejeon 34122 (KR); AHN, Kyoung Ho, Daejeon 34122 (KR); OH, Young Ho, Daejeon 34122 (KR); JEONG, You Kyeong, Daejeon 34122 (KR); KO, Yoon Seok, Daejeon 34122 (KR)
(74) Representative: Hoffmann Eitle
(86) International application number: PCT/KR2023/017535
(87) International publication number: WO 2024/096682

(57) **Abstract**

The present invention provides a lithium secondary battery comprising: a positive electrode; a negative electrode; a separator; and a non-aqueous electrolyte, wherein the positive electrode includes a positive electrode active material, the positive electrode active material includes lithium iron phosphate particles, the non-aqueous electrolyte includes lithium salt, an organic solvent, and an additive, the additive includes an oligomer including repeating units derived from monomers of a specific chemical formula, and the weight average molecular weight Mw of the oligomer is 5,000 g/mol to 25,000 g/mol.

## Description

### TECHNICAL FIELD

### Cross-reference to Related Application

This application claims the benefit of Korean Patent Application No. 10-2022-0146437, filed on November 04, 2022, in the Korean Intellectual Property Office, the disclosure of which is incorporated herein in its entirety by reference.

### Technical Field

The present invention relates to a lithium secondary battery.

### BACKGROUND ART

There is a need to develop technology for efficiently storing and utilizing electrical energy as personal IT devices and computer networks are developed with the development of information society and the accompanying dependency of society as a whole on the electrical energy is increased.

Among the developed technologies, the secondary battery is the most suitable technology for various uses, and among the secondary batteries, interests in the lithium secondary battery have been emerged which can be miniaturized to the extent that it can be applied to personal IT devices, and the like, and has the highest energy density.

In general, a lithium secondary battery is prepared by injecting a non-aqueous electrolyte into an electrode assembly composed of a positive electrode, a negative electrode, and a porous separator, or impregnating the electrode assembly with the non-aqueous electrolyte.

As a negative electrode active material for such a lithium secondary battery, a carbon-based active material, a silicon-based active material, or the like is considered. Meanwhile, as a positive electrode active material, it is considered to use a lithium-containing cobalt oxide, LiMnO₂ having a layered crystal structure, LiMn₂O₄ having a spinel crystal structure, a lithium-containing nickel oxide (LiNiO₂), or the like.

Recently, it is considered to use a lithium iron phosphate (e.g., LiFePO₄)-based compound having excellent thermal stability and relatively low cost as a positive electrode active material.

Meanwhile, a Lewis acid such as PF₅ may be formed while a PF₆⁻ anion is thermally decomposed from a lithium salt such as LiPF₆ included in the non-aqueous electrolyte, and the PF₅ may react with moisture to generate HF. Such a material such as PF₅ or HF may not only destroy the film formed on the surface of the electrode, but may also cause a decomposition reaction of the organic solvent. In particular, if the lithium iron phosphate is used as the positive electrode active material, there is a limitation in that Fe is eluted from the surface of the positive electrode active material exposed by HF and PF₅ as described above. The Fe elution destabilizes the lattice structure of the lithium iron phosphate, thereby generating active oxygen and promoting decomposition of the organic solvent in the non-aqueous electrolyte, thereby accelerating gas generation. In addition, the eluted Fe moves to the negative electrode through the non-aqueous electrolyte, electrodeposited on the surface of the negative electrode to thus destroy a solid electrolyte interface layer (hereinafter, referred to as an SEI layer), and causes additional lithium ion consumption in the process of regenerating the destroyed SEI layer, resulting in an increase in resistance and a decrease in capacity.

### DISCLOSURE OF THE INVENTION

### TECHNICAL PROBLEM

An aspect of the present invention provides a lithium secondary battery including lithium iron phosphate particles as a positive electrode active material, wherein the Fe elution from the lithium iron phosphate particles is suppressed and anions generated from a lithium salt are stabilized, thereby improving high-temperature cycle performance and high-temperature storage performance.

### TECHNICAL SOLUTION

According to an aspect of the present invention, there is provided a lithium secondary battery including a positive electrode, a negative electrode, a separator, and a non-aqueous electrolyte, wherein the positive electrode includes a positive electrode active material, the positive electrode active material includes lithium iron phosphate particles, the non-aqueous electrolyte includes a lithium salt, an organic solvent, and an additive, the additive includes an oligomer containing a repeating unit derived from a monomer represented by Formula 1 below, a repeating unit derived from a monomer represented by Formula 2 below, and a repeating unit derived from a monomer represented by Formula 3 below, and a weight average molecular weight Mw of the oligomer is 5,000 g/mol to 25,000 g/mol.

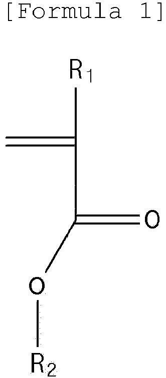

In Formula 1 above, R₁ is hydrogen or an alkyl group having 1 to 3 carbon atoms, and R₂ is an alkyl group having 1 to 20 carbon atoms.

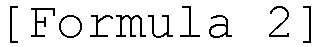

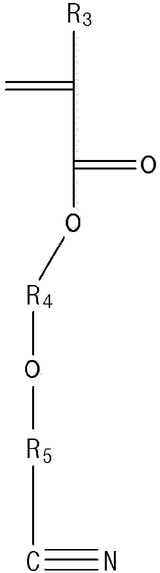

In Formula 2 above, R₃ is hydrogen or an alkyl group having 1 to 3 carbon atoms, and R₄ and R₅ are each independently an alkylene group having 1 to 10 carbon atoms.

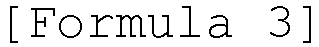

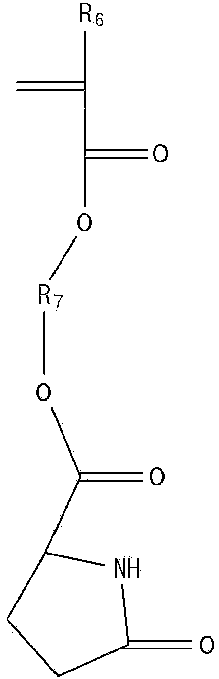

In Formula 3 above, R₆ is hydrogen or an alkyl group having 1 to 3 carbon atoms, and R₇ is an alkylene group having 1 to 10 carbon atoms.

### ADVANTAGEOUS EFFECTS

The present invention relates to a lithium secondary battery that includes a positive electrode active material including lithium iron phosphate particles in a positive electrode, and contains specific repeating units as an additive in a non-aqueous electrolyte. The additive includes an oligomer including an acrylate-based cyanide functional group and a terminal lactam group, thereby forming a stable film on the surfaces of the negative electrode and the positive electrode, simultaneously chelating Fe ions eluted from the positive electrode, and forming a complex with anions dissociated from a lithium salt to stabilize the pyrolysate of lithium salt or the anions dissociated from the lithium salt, and thus side reactions caused by the anions can be suppressed. Using the non-aqueous electrolyte for a lithium secondary battery according to the present invention, a lithium secondary battery having improved high-temperature storage performance and high-temperature cycle performance can be obtained.

### MODE FOR CARRYING OUT THE INVENTION

First, before describing the present invention, it will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

Before describing the present invention, the expressions "a" and "b" in the description of "a to b carbon atoms" in the specification each denote the number of carbon atoms included in a specific functional group. That is, the functional group may include "a" to "b" carbon atoms.

Also, unless otherwise defined in the specification, the expression "substitution" denotes that at least one hydrogen bonded to carbon is substituted with an element other than hydrogen, for example, an alkyl group having 1 to 5 carbon atoms or a fluorine element.

In the present specification, an average particle diameter (D₅₀) may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to several millimeters, and may obtain results of high reproducibility and high resolution.

Hereinafter, the present invention will be described in more detail.

### LITHIUM SECONDARY BATTERY

The present invention provides a lithium secondary battery including a positive electrode, a negative electrode, a separator, and a non-aqueous electrolyte, wherein the positive electrode includes a positive electrode active material, the positive electrode active material includes lithium iron phosphate particles, the non-aqueous electrolyte includes a lithium salt, an organic solvent, and an additive, the additive includes an oligomer containing a repeating unit derived from a monomer represented by Formula 1 below, a repeating unit derived from a monomer represented by Formula 2 below, and a repeating unit derived from a monomer represented by Formula 3 below, and a weight average molecular weight Mw of the oligomer is 5,000 g/mol to 25,000 g/mol.

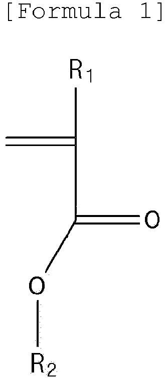

In Formula 1 above, R₁ is hydrogen or an alkyl group having 1 to 3 carbon atoms, and R₂ is an alkyl group having 1 to 20 carbon atoms.

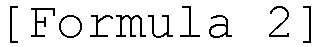

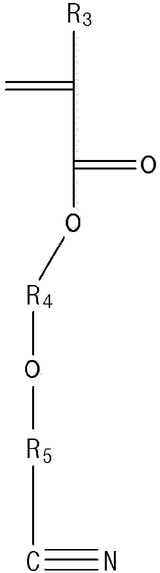

In Formula 2 above, R₃ is hydrogen or an alkyl group having 1 to 3 carbon atoms, and R₄ and R₅ are each independently an alkylene group having 1 to 10 carbon atoms.

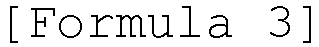

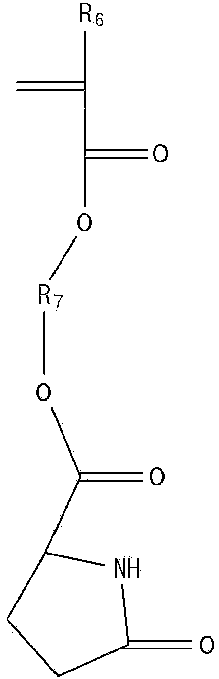

In Formula 3 above, R₆ is hydrogen or an alkyl group having 1 to 3 carbon atoms, and R₇ is an alkylene group having 1 to 10 carbon atoms.

The present invention relates to a lithium secondary battery that includes a positive electrode active material including lithium iron phosphate particles in a positive electrode, and contains specific repeating units as an additive in a non-aqueous electrolyte. The additive includes an oligomer including an acrylate-based cyanide functional group and a terminal lactam group, thereby forming a stable film on the surfaces of the negative electrode and the positive electrode, simultaneously chelating Fe ions eluted from the positive electrode, and forming a complex with anions dissociated from a lithium salt to stabilize the pyrolysate of lithium salt or the anions dissociated from the lithium salt, and thus side reactions caused by the anions can be suppressed. Using the non-aqueous electrolyte for a lithium secondary battery according to the present invention, a lithium secondary battery having improved high-temperature storage performance and high-temperature cycle performance can be obtained.

The lithium secondary battery includes: a positive electrode; a negative electrode; a separator; and a non-aqueous electrolyte. Specifically, the lithium secondary battery includes: a positive electrode; a negative electrode facing the positive electrode; a separator interposed between the positive electrode and the negative electrode; and the non-aqueous electrolyte. The lithium secondary battery may be prepared by accommodating, in a battery case, an electrode assembly including: the positive electrode; the negative electrode facing the positive electrode; and the separator interposed between the positive electrode and the negative electrode, and then injecting the non-aqueous electrolyte.

### (1) Positive Electrode

The positive electrode includes a positive electrode active material. The positive electrode active material includes lithium iron phosphate particles.

The lithium iron phosphate particles may include a compound represented by Formula A below:

[Formula A] Li₁₊ₐ Fe₁₋ₛMₛ (PO_{4-b})X_{b}

wherein, in Formula A above, M is at least one element selected from among Co, Ni, Al, Mg, Ti, and V; X is F, S, or N; 0≤s≤0.5; -0.5≤a≤0.5; and 0≤b≤0.1.

Formula A above may be specifically represented by LiFePO₄ (a=0, s=0, and b=0).

The lithium iron phosphate particles may be composed of primary particles, or secondary particles in which two or more primary particles are aggregated, or may be a mixture of the primary particles and secondary particles in which two or more primary particles are aggregated.

In this case, the primary particles may have an average particle diameter (D₅₀) of 0.2 µm to 3.0 µm, specifically 0.2 µm to 1.0 µm, and more specifically 0.3 µm to 0.8 µm, and the secondary particles may have an average particle diameter (D₅₀) of 7 µm to 25 µm, specifically 10 µm to 20 µm.

The positive electrode active material may further include a carbon coating layer positioned on the lithium iron phosphate particle. The carbon coating layer may be introduced for the purpose of protecting lithium iron phosphate particles and improving electrical conductivity.

The positive electrode may include: a positive electrode current collector; and a positive electrode active material layer disposed on at least one surface of the positive electrode current collector. In this case, the positive electrode active material layer may include the above-described positive electrode active material.

The positive electrode current collector is not particularly limited so long as it has high conductivity without causing adverse chemical changes in the battery. Specifically, copper, stainless steel, aluminum, nickel, titanium, fired carbon, copper or stainless steel that is surface-treated with one of carbon, nickel, titanium, silver, or the like, an aluminum-cadmium alloy, or the like may be used as the positive electrode current collector.

The positive electrode current collector may typically have a thickness of 3 µm to 500 µm.

The positive electrode current collector may have microscopic irregularities formed on the surface thereof to enhance the adhesion of a positive electrode active material. For example, the positive electrode current collector may be used in various shapes such as a film, a sheet, a foil, a net, a porous body, a foam body, and a non-woven fabric body.

The positive electrode active material layer is disposed on at least one surface of the positive electrode current collector. Specifically, the positive electrode active material layer may be disposed on one surface or both surfaces of the positive electrode current collector.

The positive electrode active material may be included in an amount of 80 wt% to 99 wt% in the positive electrode active material layer in consideration of exhibiting sufficient capacity of the positive electrode active material.

The positive electrode active material layer may further include a conductive agent and/or a binder together with the positive electrode active material as described above.

The binder is a component that assists in the binding between the active material and the conductive agent and in the binding with the current collector, and specifically may include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and preferably include polyvinylidenefluoride.

The binder may be included in an amount of 1 wt% to 20 wt%, and preferably, 1.2 wt% to 10 wt% in the positive electrode active material layer in terms of securing sufficient binding force between components such as positive electrode active materials.

The conductive agent is not particularly limited so long as it can be used to assist and improve conductivity in the secondary battery and has conductivity without causing adverse chemical changes. Specifically, the positive electrode conductive agent may include at least one selected from the group consisting of graphite such as natural graphite or artificial graphite; carbon black such as carbon black, acetylene black, Ketjen black, channel black, furnace black, lamp black or thermal black; a conductive fiber such as a carbon fiber or a metal fiber; a conductive tube such as a carbon nanotube; fluorocarbon; metal powder such as aluminum or nickel powder; a conductive whisker such as a zinc oxide whisker or a potassium titanate whisker; a conductive metal oxide such as a titanium oxide; and a polyphenylene derivative, and preferably include carbon black in terms of the improvement in conductivity.

The conductive agent may be included in an amount of 1 wt% to 20 wt%, and preferably, 1.2 wt% to 10 wt% in the positive electrode active material layer in terms of securing sufficient electrical conductivity.

The positive electrode active material layer may have a thickness of 100 µm to 300 µm, and preferably, 200 µm to 250 µm.

The loading amount of the positive electrode active material layer may be 400 mg/25cm² to 700 mg/25cm², preferably 450 mg/25cm² to 650 mg/25cm². In addition, the loading amount of the positive electrode active material layer may be 2.8 mAh/cm² to 4.5 mAh/cm², preferably 3.0 mAh/cm² to 4.0 mAh/cm².

The positive electrode may be prepared by coating a positive electrode current collector with a positive electrode slurry including a positive electrode active material, and optionally a binder, a conductive agent, and a solvent for forming a positive electrode slurry and then drying and rolling the coated positive electrode current collector.

The solvent for forming a positive electrode slurry may include an organic solvent such as N-methyl-2-pyrrolidone (NMP). A solid content in the positive electrode slurry may be in a range of 40 wt% to 90 wt%, and particularly, 50 wt% to 80 wt%.

### (2) Negative Electrode

The negative electrode may face the positive electrode.

The negative electrode includes a negative electrode active material.

The negative electrode may include a negative electrode current collector and a negative electrode active material layer disposed on at least one surface of the negative electrode current collector. In this case, the negative electrode active material may be included in the negative electrode active material layer.

The negative electrode current collector is not particularly limited so long as it has high conductivity without causing adverse chemical changes in the battery. Specifically, copper, stainless steel, aluminum, nickel, titanium, fired carbon, copper or stainless steel that is surface-treated with one of carbon, nickel, titanium, silver, or the like, an aluminum-cadmium alloy, or the like may be used as the negative electrode current collector.

The negative electrode current collector may typically have a thickness of 3 µm to 500 µm.

The negative electrode current collector may have microscopic irregularities formed on the surface thereof to enhance the adhesion of the negative electrode active material. For example, the negative electrode current collector may be used in various shapes such as a film, a sheet, a foil, a net, a porous body, a foam body, and a non-woven fabric body.

The negative electrode active material layer is disposed on at least one surface of the negative electrode current collector. Specifically, the negative electrode active material layer may be disposed on one surface or both surfaces of the negative electrode current collector.

The negative electrode active material layer may include the negative electrode active material.

The negative electrode active material is a material capable of reversibly intercalating/deintercalating lithium ions, may include at least one selected from the group consisting of a carbon-based active material, a (metalloid-) metal-based active material, and a lithium metal, and specifically, may include at least one selected from the group consisting of a carbon-based active material and a (metalloid-) metal-based active material.

The carbon-based active material may include at least one selected from the group consisting of artificial graphite, hard carbon, soft carbon, carbon black, graphene, and fibrous carbon, and may preferably include graphite. The graphite may include at least one selected from the group consisting of artificial graphite and natural graphite.

The carbon-based active material may have an average particle diameter (D₅₀) of 10 µm to 30 µm, preferably, 15 µm to 25 µm in terms of reducing side reactions with the electrolyte while maintaining structural stability during charging and discharging.

Specifically, the (metalloid-) metal-based active material may include: at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a lithium titanium oxide (LTO); a lithium vanadium oxide, or the like.

More specifically, the (metalloid-) metal-based active material may include a silicon-based active material.

The silicon-based active material may include a compound represented by SiOₓ (0≤x<2). Since SiO₂ does not react with lithium ions and thus cannot store lithium, x is preferably within the above range, and more preferably, the silicon-based oxide may be SiO.

The silicon-based active material may have an average particle diameter (D₅₀) of 1 µm to 30 µm, preferably 2 µm to 15 µm in terms of reducing side reactions with the electrolyte while maintaining structural stability during charging and discharging.

The negative electrode active material may be included in an amount of 60 wt% to 99 wt%, and preferably, 75 wt% to 95 wt% in the negative electrode active material layer.

The negative electrode active material layer may further include a conductive agent and/or a binder together with the negative electrode active material.

The binder is used to improve the adhesion between the negative electrode active material layer and the negative electrode current collector and improve the battery performance, and may include, for example, at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, and a material in which hydrogen thereof is substituted with Li, Na, Ca, or the like, and may also include various copolymers thereof.

The binder may be included in an amount of 0.5 wt% to 10 wt%, and preferably, 1 wt% to 5 wt% in the negative electrode active material layer.

The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 10 wt%, and preferably, 1 wt% to 5 wt% in the negative electrode active material layer.

The negative electrode active material layer may have a thickness of 50 µm to 300 µm, and preferably, 100 µm to 200 µm.

The loading amount of the negative electrode active material layer may be 200 mg/25cm² to 500 mg/25cm², preferably 250 mg/25cm² to 400 mg/25cm². The loading amount of the negative electrode active material layer may be 2.5 mAh/cm² to 5.0 mAh/cm², preferably 3.0 mAh/cm² to 4.5 mAh/cm².

The negative electrode may be prepared by coating at least one surface of the negative electrode current collector with a negative electrode slurry including a negative electrode active material, a binder, a conductive agent, and a solvent for forming a negative electrode slurry and then drying and rolling the coated negative electrode current collector.

The solvent for forming a negative electrode slurry may include, for example, at least one selected from the group consisting of distilled water, N-methyl-2-pyrrolidone (NMP), ethanol, methanol, and isopropyl alcohol, and preferably include distilled water in terms of facilitating the dispersion of the negative electrode active material, the binder and/or the conductive agent. A solid content in the negative electrode slurry may be in a range of 30 wt% to 80 wt%, and particularly, 40 wt% to 70 wt%.

### (3) Separator

The separator may be interposed between the positive electrode and the negative electrode.

As the separator, a typical porous polymer film used as a typical separator, for example, a porous polymer film prepared from a polyolefin-based polymer, such as an ethylene homopolymer, a propylene homopolymer, an ethylene-butene copolymer, an ethylene-hexene copolymer, and an ethylene-methacrylate copolymer, may be used alone or in a lamination therewith, or a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

### (4) Non-aqueous Electrolyte

### 1) Lithium Salt

First, the lithium salt will be described as follows.

In a non-aqueous electrolyte solution for a lithium secondary battery according to an embodiment of the present invention, any lithium salt typically used in an electrolyte solution for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻ as an anion. Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiTFSI (LiN(SO₂CF₃)₂), LiFSI (LiN(SO₂F)₂), LiCH₃SO₃, LiCF₃CO₂, LiCH₃CO₂, and LiBETI (LiN(SO₂CF₂CF₃)₂. Specifically, the lithium salt may include a single material selected from the group consisting of LiBF₄, LiClO₄, LiPF₆, LiBOB (LiB(C₂O₄)₂), LiCF₃SO₃, LiTFSI (LiN(SO₂CF₃)₂), LiFSI (LiN(SO₂F)₂), and LiBETI (LiN(SO₂CF₂CF₃)₂, or a mixture of two or more thereof, and more specifically, may include LiPF₆.

The lithium salt may be appropriately changed in a normally usable range, but may be included in a concentration of 0.8 M to 3.0 M, for example, 1.0 M to 3.0 M in the electrolyte solution to obtain an optimum effect of forming a film for preventing corrosion of the surface of the electrode.

In a case in which the concentration of the lithium salt satisfies the above range, viscosity of the non-aqueous electrolyte solution may be controlled so that optimal impregnability may be achieved, and an effect of improving capacity characteristics and cycle characteristics of the lithium secondary battery may be obtained by improving mobility of lithium ions.

### 2) Organic Solvent

The organic solvent is a non-aqueous solvent commonly used in a lithium secondary battery, and is not particularly limited as long as it may minimize decomposition by oxidation reaction or the like in the process of charging and discharging the secondary battery.

Specifically, the organic solvent may include a cyclic carbonate-based organic solvent and a linear carbonate-based organic solvent.

The cyclic carbonate-based organic solvent is an organic solvent which may well dissociate the lithium salt in the electrolyte due to high permittivity as a highly viscous organic solvent, specifically, may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and more specifically, may include ethylene carbonate.

In addition, the linear carbonate-based organic solvent is an organic solvent having low viscosity and low permittivity, and specifically may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate. In the case of a positive electrode including lithium iron phosphate particles as a positive electrode active material, the thickness thereof should be increased to achieve the required energy density, and accordingly, in terms of further improving electrolyte solution wetting, the linear carbonate-based organic solvent may specifically include dimethyl carbonate and ethyl methyl carbonate, more specifically, may include dimethyl carbonate and ethyl methyl carbonate at a volume ratio of 10:90 to 90:10, and even more specifically, may include dimethyl carbonate and ethyl methyl carbonate at a volume ratio of 40:60 to 70:30.

The organic solvent may be a mixture of a cyclic carbonate-based organic solvent and a linear carbonate-based organic solvent. In this case, the cyclic carbonate-based organic solvent and the linear carbonate-based organic solvent may be mixed at a volume ratio of 10:90 to 40:60, specifically, at a volume ratio of 15:85 to 35:65.

Meanwhile, if necessary, any organic solvent commonly used in a non-aqueous electrolyte may be additionally used without limitation as the organic solvent. For example, at least one organic solvent among an ester-based organic solvent, an ether-based organic solvent, a glyme-based solvent, and a nitrile-based organic solvent may be further included.

The ester-based organic solvent may include at least one selected from the group consisting of methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone.

As the ether-based solvent, any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent and having lower reactivity with metal, and may include at least one selected from the group consisting of dimethoxyethane (glyme, DME), diethoxyethane, diglyme, triglyme, and tetraglyme (TEGDME), but the glyme-based solvent is not limited thereto.

The nitrile-based organic solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but the nitrile organic solvent is not limited thereto.

Meanwhile, the remainder excluding the lithium salt and the additives in the non-aqueous electrolyte may all be the organic solvent unless otherwise stated.

### (3) Additives

The non-aqueous electrolyte of the present invention includes additives.

The additive includes an oligomer. The oligomer may contain a repeating unit derived from a monomer represented by Formula 1 below, a repeating unit derived from a monomer represented by Formula 2 below, and a repeating unit derived from a monomer represented by Formula 3 below:

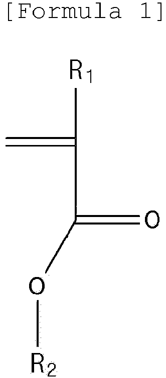

In Formula 1 above, R₁ is hydrogen or an alkyl group having 1 to 3 carbon atoms, and R₂ is an alkyl group having 1 to 20 carbon atoms.

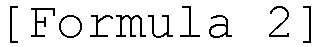

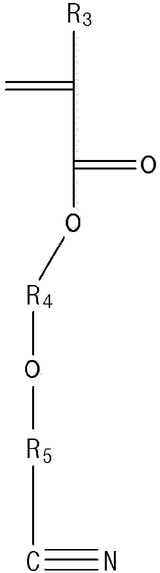

In Formula 2 above, R₃ is hydrogen or an alkyl group having 1 to 3 carbon atoms, and R₄ and R₅ are each independently an alkylene group having 1 to 10 carbon atoms.

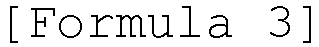

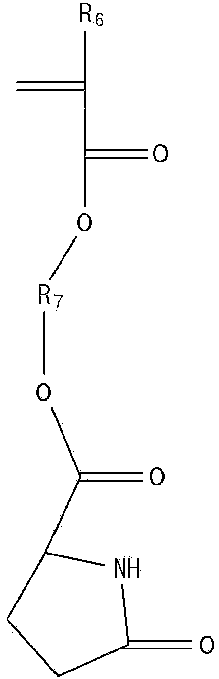

In Formula 3 above, R₆ is hydrogen or an alkyl group having 1 to 3 carbon atoms, and R₇ is an alkylene group having 1 to 10 carbon atoms.

The oligomer according to the present invention includes a repeating unit structure derived from the monomer represented by Formula 2 above containing an acrylate-based cyanide functional group. Since the cyanide structure forms a stable film on the surface of the positive electrode and also has a strong bonding force with metal ions, it is possible to control elution of Fe ions from the positive electrode. In particular, Fe ions have a larger ion size than other metal ions such as Ni and Co, and have a small effective nuclear charge, and thus the conventional monomolecular nitrile-based additive cannot sufficiently exhibit Fe capture performance. However, the oligomer according to the present invention has multiple electron donating groups in one molecule, and thus may exhibit significantly excellent performance for controlling Fe ion elution, and may be preferably used in a lithium secondary battery using lithium iron phosphate particles as a positive electrode active material.

In addition, the oligomer according to the present invention includes a repeating unit structure derived from a monomer represented by Formula 3 containing an acrylate-based terminal lactam group, for example, a pyrrolidone group. Since the compound represented by Formula 3 is coordinated with a pyrolysate of a lithium salt such as LiPF₆ or an anion dissociated from the lithium salt to form a complex, the pyrolysate of the lithium salt or the anion dissociated from the lithium salt may be stabilized, and thus the side reactions with the electrolyte may be suppressed.

Therefore, the lithium secondary battery according to the present invention may have a significant improvement in high-temperature durability, high-temperature storage characteristics, and high-temperature cycle characteristics due to the above-described characteristics.

Meanwhile, in Formula 1 above, R₁ may be hydrogen or an alkyl group having 1 to 10 carbon atoms, and more specifically, hydrogen or an alkyl group having 1 to 7 carbon atoms.

In addition, in Formula 2 above, R₄ and R₅ may be each independently an alkylene group having 1 to 7 carbon atoms, and more specifically, may be each independently an alkylene group having 1 to 5 carbon atoms.

In addition, in Formula 3 above, R₇ may be an alkylene group having 1 to 7 carbon atoms, and more specifically, may be an alkylene group having 1 to 5 carbon atoms.

The oligomer according to the present invention may be an oligomer represented by Formula 4 below:

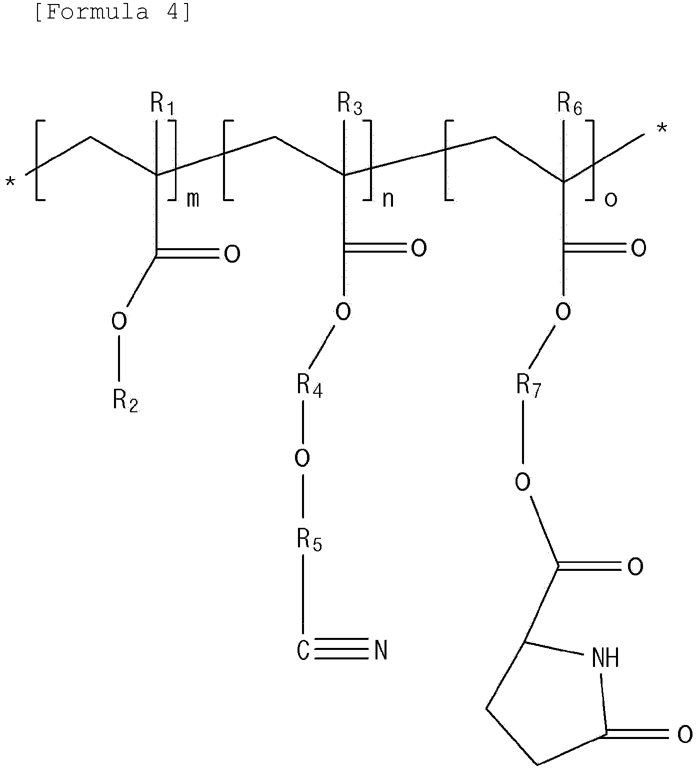

In Formula 4 above,
R₁, R₃, and R₆ are each independently hydrogen or an alkyl group having 1 to 3 carbon atoms,
R₂ is an alky group having 1 to 20 carbon atoms,
R₄, R₅ and R₇ are each independently an alkylene group of 1 to 10 carbon atoms,
m is a number of moles of 0.1 to 30,
n is a number of moles of 0.1 to 80, and
o is a number of moles of 0.1 to 80.

More specifically, the oligomer may be at least one selected from the group consisting of oligomers represented by Formula 4-1 and Formula 4-2 below.

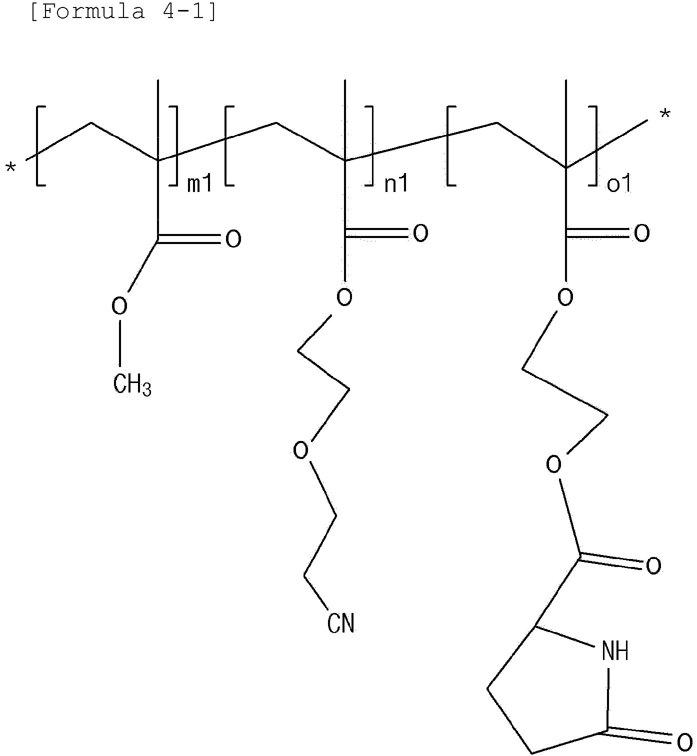

In Formula 4-1 above,
m1 is a number of moles of 0.1 to 30,
n1 is a number of moles of 0.1 to 80, and
o1 is a number of moles of 0.1 to 80.

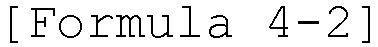

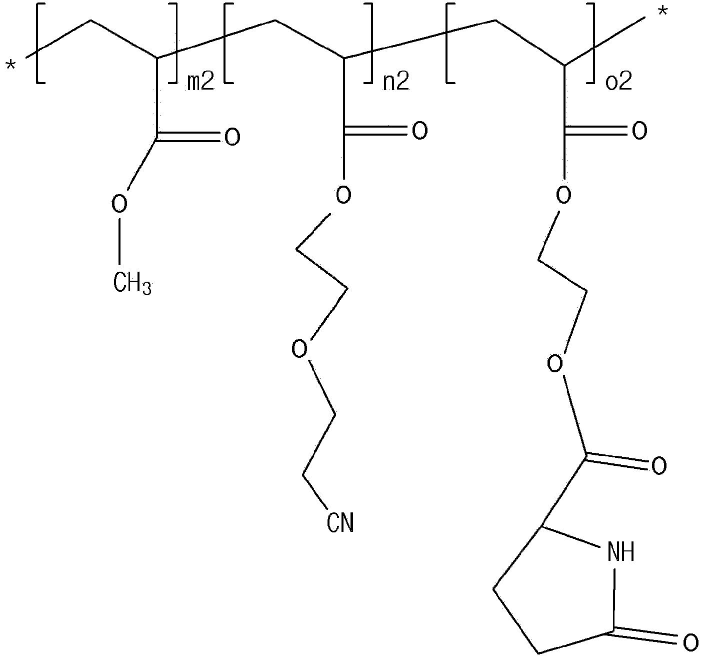

In Formula 4-2 above,
m2 is a number of moles of 0.1 to 30,
n2 is a number of moles of 0.1 to 80, and
o2 is a number of moles of 0.1 to 80.

In Formula 4-1 above, preferably, m1 may be a number of moles of 5 to 20, n1 may be a number of moles of 20 to 60, and o1 may be a number of moles of 8 to 25. In Formula 4-1 above, more preferably, m1 may be a number of moles of 8 to 15, n1 may be a number of moles of 30 to 50, and o1 may be a number of moles of 10 to 20. In the above range, the number of electron donating groups in the oligomer is controlled to a desired level, thereby improving capturing capacity of Fe ions, and the weight average molecular weight of the oligomer is controlled to a desired level, thereby preventing the formation of an electrode film having an excessively high molecular weight and preventing an increase in resistance of a cell.

In Formula 4-2 above, preferably, m2 may be a number of moles of 5 to 20, n2 may be a number of moles of 20 to 60, and o2 may be a number of moles of 8 to 25. In Formula 4-2 above, more preferably, m2 may be a number of moles of 8 to 15, n2 may be a number of moles of 30 to 50, and o2 may be a number of moles of 10 to 20. In the above range, the number of electron donating groups in the oligomer is controlled to a desired level, thereby improving capturing capacity of Fe ions, and the weight average molecular weight of the oligomer is controlled to a desired level, thereby preventing the formation of an electrode film having an excessively high molecular weight and preventing an increase in resistance of a cell.

The oligomer according to the present invention has a weight average molecular weight Mw of 5,000 g/mol to 25,000 g/mol. The oligomer according to the present invention has the above-described range of the weight average molecular weight, thereby improving the effect of controlling the elution of Fe, and it is possible to form an electrode film having improved output performance.

If the weight average molecular weight Mw of the oligomer contained in the non-aqueous electrolyte is less than 5,000 g/mol, it is not preferable because the number of electron donating groups in one molecule is small, and thus capturing capacity of Fe ions is deteriorated. Meanwhile, if the weight average molecular weight Mw of the oligomer contained in the non-aqueous electrolyte is greater than 25,000 g/mol, it is not preferable because high molecular weight positive/negative electrode films are formed to increase cell resistance, and thus, capacity reduction and resistance increase rate are increased.

The weight average molecular weight Mw of the oligomer according to the present invention may be specifically 8,000 g/mol to 18,000 g/mol, and more specifically 10,000 g/mol to 15,000 g/mol. When the weight average molecular weight Mw is in the above-described range, the above-described effects may be more preferably achieved.

The weight average molecular weight Mw of the oligomer may be achieved by adjusting the number of the above-described repeating units (derived from the monomers of Formula 1, Formula 2, and Formula 3).

The weight average molecular weight Mw may be measured using a gel permeation chromatography (GPC) apparatus, and the molecular weight may refer to a weight average molecular weight unless otherwise specified. For example, in the present invention, the weight average molecular weight Mw is measured using Agilent 1200 series under GPC conditions, and the column used may be the Agilent PL mixed B column, and THF or DMF may be used as a solvent.

In addition, the oligomer may be contained in an amount of 0.1 wt% to 25 wt% with respect to the total weight of the non-aqueous electrolyte for a lithium secondary battery. When the oligomer is contained in the amount range, it is possible to achieve an effect of improving anion stabilization and an effect of forming a stable film.

Specifically, the oligomer may be contained in an amount of 0.3 wt% to 15 wt%, preferably 0.5 wt% to 10 wt%, and more preferably 0.7 wt% to 1.5 wt% with respect to the total weight of the non-aqueous electrolyte for a lithium secondary battery.

When the oligomer content is 0.1 wt% or more, due to the formation of a complex with anions during the battery driving time, the anion stabilization may be more stably maintained, and the elution of metal ions may be suppressed through the formation of a complex with metal ions and the formation of a film due to the adsorption of the surface of the positive electrode. Furthermore, if the oligomer content is 25 wt% or less, it is possible to prevent an increase in the viscosity of the electrolyte solution due to the surplus compound, as well as improve the mobility of ions in the battery, significantly improve the effect of suppressing cell swelling, and effectively prevent an increase in resistance of the battery by suppressing the formation of an excessive film, thereby preventing the deterioration in capacity and cycle characteristics.

Also, the additives may further include other additional additives in addition to the compound represented by Formula 1 above, if necessary, in order to prevent the occurrence of the collapse of the negative electrode due to the decomposition of the non-aqueous electrolyte solution in a high power environment or to further improve low-temperature high rate discharge characteristics, high-temperature stability, overcharge prevention, and an effect of suppressing battery swelling at high temperatures.

Examples of the additional additives may include at least one selected from the group consisting of a cyclic carbonate-based compound, a halogen-substituted carbonate-based compound, a sultone-based compound, a sulfate-based compound, a phosphate- or phosphite-based compound, a borate-based compound, a nitrile-based compound, a benzene-based compound, an amine-based compound, a silane-based compound, and a lithium salt-based compound.

The cyclic carbonate-based compound, for example, may include vinylene carbonate (VC) or vinyl ethylene carbonate.

The halogen-substituted carbonate-based compound may be, for example, fluoroethylene carbonate (FEC) or the like.

The sultone-based compound, for example, may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound, for example, may include ethylene sulfate (Esa), trimethylene sulfate (TMS), or methyl trimethylene sulfate (MTMS).

The phosphate- or phosphite-based compound may be, for example, at least one compound selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl) phosphate, and tris(trifluoroethyl)phosphite.

The borate-based compound may include tetraphenylborate, lithium difluoro(oxalato)borate (LiODFB), lithium bis(oxalato)borate (LiB(C₂O₄)₂), LiBOB), or the like.

The nitrile-based compound may be, for example, at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be, for example, fluorobenzene, the amine-based compound may be triethanolamine or ethylenediamine, and the silane-based compound may be tetravinylsilane.

The lithium salt-based compound is a compound different from the lithium salt contained in the non-aqueous electrolyte solution, wherein the lithium salt-based compound may include lithium difluorophosphate (LiPO₂F₂), LiBF₄, or the like.

The additional additives may specifically include at least one selected from the group consisting of vinylene carbonate, 1,3-propane sultone, and ethylene sulfate, and more specifically, may include vinylene carbonate, 1,3-propane sultone, and ethylene sulfate. This is preferable in terms of forming a more rigid SEI layer on the surfaces of the positive electrode and/or the negative electrode during the initial activation process of the secondary battery, and further improving high-temperature stability.

The additional additives may be used by mixing two or more compounds, and the total content of the compound represented by Formula 1 above and the additional additives may be 0.05 wt% to 20 wt%, and specifically 0.05 wt% to 10 wt% with respect to the total weight of the non-aqueous electrolyte. When the total content of the additives satisfies the above range, high-temperature storage characteristics and high-temperature life characteristics may be more effectively improved, and the side reactions of the battery due to the additives remaining after the reaction may be prevented.

The lithium secondary battery according to the present invention as described above may be suitably used in portable devices, such as mobile phones, notebook computers, and digital cameras, and electric cars such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, a coin type, or the like may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to examples.

In this case, the examples according to the present invention may be modified in various different forms, and the scope of the present invention should not be interpreted to be limited to the examples described below. Rather, the examples of the present invention are provided so that this description will be thorough and complete, and will fully convey the scope of the present invention to those skilled in the art.

Hereinafter, the present invention will be described in detail with reference to specific examples.

### Examples

### Example 1

### (Non-aqueous Electrolyte Preparation)

An organic solvent was prepared by mixing ethylene carbonate (EC), ethyl methyl carbonate (EMC), and dimethyl carbonate (DMC) at a volume ratio of 30:30:40.

LiPF₆ as a lithium salt was dissolved in the organic solvent to have a molar concentration of 1.0 M.

In addition, a non-aqueous electrolyte was prepared by adding the compound represented by Formula 4-1 above (m1 = 10, n1 = 40, o1 = 15, weight average molecular weight Mw = 13,000 g/mol), vinylene carbonate, 1,3-propane sultone, and ethylene sulfate as additives to the organic solvent in which the lithium salt had been dissolved.

The compound represented by Formula 4-1 above was contained in the non-aqueous electrolyte in an amount of 0.5 wt%. In addition, the vinylene carbonate was contained in the non-aqueous electrolyte in an amount of 1 wt%, the 1,3-propane sultone was contained in the non-aqueous electrolyte in an amount of 0.5 wt%, and the ethylene sulfate was contained in the non-aqueous electrolyte in an amount of 1 wt%.

### (Secondary Battery Preparation)

Lithium iron phosphate (LiFePO₄) particles having a carbon coating layer as a positive electrode active material, carbon black as a conductive agent, and polyvinylidene fluoride (PVdF) as a binder were added to N-methyl-2-pyrrolidone (NMP), as a solvent, at a weight ratio of 94:3:3 to prepare a positive electrode slurry. A 15-µm thick positive electrode current collector (Al thin film) was coated with the positive electrode slurry at a loading amount of 600 mg/25cm², dried, and then roll-pressed to prepare a positive electrode (thickness of the positive electrode active material: 220 µm).

Artificial graphite as a negative electrode active material, SBR-CMC as a binder, and carbon black as a conductive agent were added to water, as a solvent, at a weight ratio of 97:2:1 to prepare a negative electrode slurry. A 15-µm thick copper (Cu) thin film, as a negative electrode current collector, was coated with the negative electrode slurry at a loading amount of 300 mg/25cm², dried, and then roll-pressed to prepare a negative electrode (thickness of the negative electrode active material: 170 µm).

The positive electrode, a polyolefin-based porous separator, and the negative electrode were sequentially stacked to prepare an electrode assembly.

After the assembled electrode assembly was accommodated in a battery case and then the prepared non-aqueous electrolyte solution was injected thereto to prepare a lithium secondary battery.

### Example 2

A non-aqueous electrolyte and a lithium secondary battery were prepared in the same manner as in Example 1, except that the compound represented by Formula 4-1 above was added in the non-aqueous electrolyte in an amount of 1 wt%.

### Example 3

A non-aqueous electrolyte and a lithium secondary battery were prepared in the same manner as in Example 1, except that the compound represented by Formula 4-1 above was added in the non-aqueous electrolyte in an amount of 5 wt%.

### Example 4

A non-aqueous electrolyte and a lithium secondary battery were prepared in the same manner as in Example 1, except that the compound represented by Formula 4-1 above was added in the non-aqueous electrolyte in an amount of 10 wt%.

### Comparative Example 1

A non-aqueous electrolyte and a lithium secondary battery were prepared in the same manner as in Example 1, except that the compound represented by Formula 4-1 above was not added in the non-aqueous electrolyte.

### Comparative Example 2

A non-aqueous electrolyte and a lithium secondary battery were prepared in the same manner as in Example 2, except that a compound represented by Formula 4-1, in which m1 was 2, n1 was 7, o1 was 2, and a weight average molecular weight was 2,300 g/mol, was used (contained in the non-aqueous electrolyte in an amount of 1 wt%) instead of the compound represented by Formula 4-1 used in Example 1.

### Comparative Example 3

A non-aqueous electrolyte and a lithium secondary battery were prepared in the same manner as in Example 2, except that a compound represented by Formula 4-1, in which m1 was 25, n1 was 95, o1 was 35, and a weight average molecular weight was 32,000 g/mol, was used (contained in the non-aqueous electrolyte in an amount of 1 wt%) instead of the compound represented by Formula 4-1 used in Example 1.

### Comparative Example 4

A non-aqueous electrolyte and a lithium secondary battery were prepared in the same manner as in Example 2, except that a compound represented by Formula 5 below (a = 15, b = 60, weight average molecular weight: 13,000 g/ mol) was used (contained in the non-aqueous electrolyte in an amount of 1 wt%) instead of the compound represented by Formula 4-1 above.

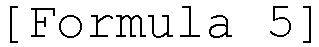

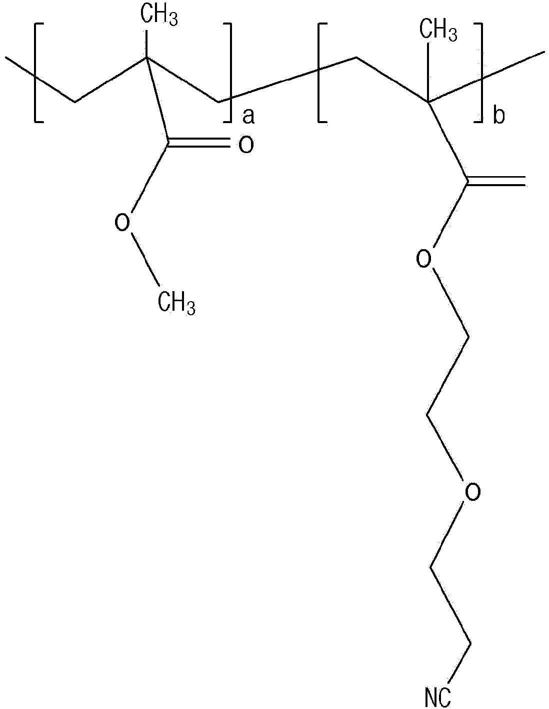

### Comparative Example 5

A non-aqueous electrolyte and a lithium secondary battery were prepared in the same manner as in Example 2, except that a compound represented by Formula 6 below (m3= 10, n3= 40, o3= 15, weight average molecular weight: 13,000 g/mol) was used (contained in the non-aqueous electrolyte in an amount of 1 wt%) instead of the compound represented by Formula 4-1 above.

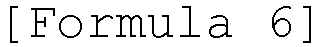

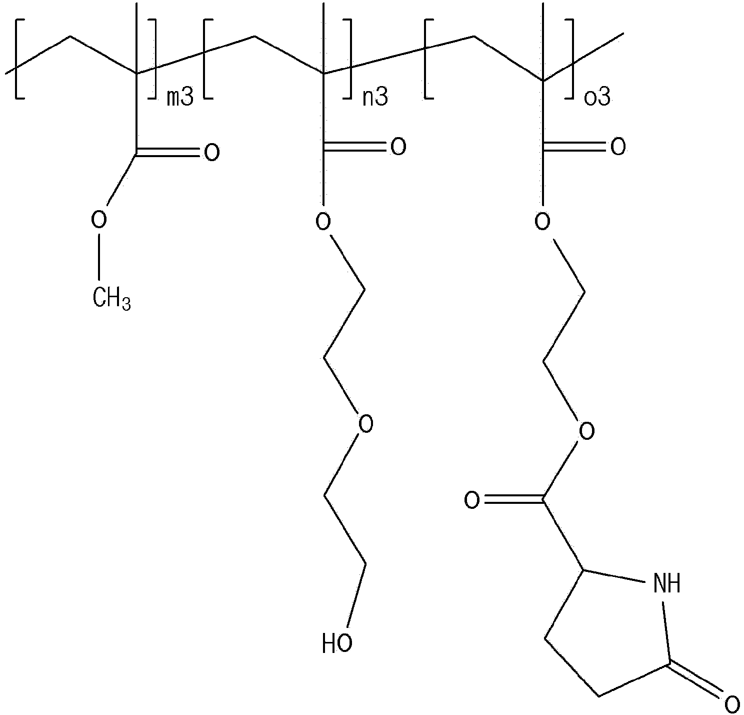

### Experimental Examples

### Experimental Example 1: Evaluation of High-temperature Cycle Charge/Discharge Performance

That each of the lithium secondary batteries prepared in Examples 1 to 4 and Comparative Examples 1 to 5 was charged at 0.33 C rate to 3.65 V under a constant current/constant voltage condition at 45 °C, then discharged at 0.33 C rate under a constant current condition to 2.5 V was defined as one cycle and one cycle was carried out, and then discharge capacity and resistance after one cycle were measured. In this case, the resistance was measured by using the difference in voltage drop obtained by checking the capacity at room temperature, charging the battery at 50% SOC on the basis of the discharge capacity, and discharging the battery at a current of 2.5 C for 10 seconds.

Then, after performing 300 cycles of charging and discharging under the above charging and discharging conditions, the capacity retention (%) and the resistance increase rate (%) were measured. The capacity retention (%) was calculated according to [Equation 1] below, and the resistance increase rate (%) was calculated according to [Equation 2] below. Measurement results are listed in Table 1 below. Capacity retention (%) = (discharge capacity after 300 cycles/discharge capacity after 1 cycle) × 100 Resistance increase rate (%) = {(resistance after 300 cycles - resistance after 1 cycle)/resistance after 1 cycle} × 100

### Experimental Example 2: Evaluation of Recovery Capacity

Each of the lithium secondary batteries prepared in Examples 1 to 4 and Comparative Examples 1 to 5 was fully charged up to SOC 100% under a voltage condition of 3.65 V. Thereafter, the battery was stored for 8 weeks at 60 °C, then was charged at 0.33 C and discharged at 0.33 C, and the recovery capacity was measured, and the results are listed in Table 1 below.

### Experimental Example 3: Evaluation of Resistance Increase Rate during High-temperature Storage

The lithium secondary batteries of Examples 1 to 4 and Comparative Examples 1 to 5 as prepared above were charged to 3.65 V under conditions of CC/CV and 0.33 C at 25 °C and discharged to 2.5 V at 0.33 C to perform initial charging and discharging, charged to SOC 50% on the basis of the discharge capacity after checking the capacity at room temperature, and discharged at a current of 2.5 C for 10 seconds to measure resistance by means of a voltage drop difference at this time, and this resistance was defined as an initial resistance. The batteries were stored for 8 weeks at 60 °C, and then a resistance was measured in the same manner, and this resistance was defined as a final resistance, thereby calculating a resistance increase rate through Equation 4 below. The results are listed in Table 1 below. Resistance increase rate (%) = (final resistance - initial resistance) / (initial resistance) × 100

### Experimental Example 4: Metal Dissolution Amount Evaluation

Each of the lithium secondary batteries prepared in Examples 1 to 4 and Comparative Examples 1 to 5 was fully charged up to SOC 100% under a voltage condition of 3.65 V at 25 °C. Then, the batteries were stored at 60 °C for 8 weeks, then charged at 0.33 C and discharged at 0.33 C, and disassembled in a fully discharged state. The amount of Fe precipitated on the negative electrode was analyzed (ICP-OES, Perkin Elmer, AVIO 500), and the results are listed in Table 1 below.

### Experimental Example 5: Anion Stabilization Evaluation

The non-aqueous electrolytes used in Examples 1 to 4 and Comparative Examples 1 to 5, respectively, were stored at 60 °C for 1 week, and the generation amount of HF present in the stored non-aqueous electrolytes was measured through HF titration (using 785 DMP Titrino instrument from Metrohm). The results are listed in Table 1 below.

**[Table 1]**

| | Experimental Example 1 | | Experim ental Example 2 | Experim ental Example 3 | Experim ental Example 4 | Experime ntal Example 5 |
|---|---|---|---|---|---|---|
| | Capacit y retenti on (% 300^{th} cycle) | Resista nce increas e rate (%, 300^{th} cycle) | Recover y capacit y (%, 8-week storage ) | Resista nce increas e rate (%, 8-week storage ) | Fe elution amount (unit: ppm) | HF generati on amount (unit: ppm) |
| Example 1 | 95.1 | 5.2 | 93.2 | 8.1 | 206 | 208 |
| Example 2 | 96.3 | 3.4 | 94.3 | 6.8 | 156 | 176 |
| Example 3 | 95.9 | 3.9 | 92.8 | 8.9 | 131 | 142 |
| Example 4 | 95.0 | 6.1 | 92.1 | 10.1 | 102 | 98 |
| Comparative Example 1 | 88.3 | 18.3 | 87.2 | 24.8 | 334 | 283 |
| Comparative Example 2 | 90.2 | 8.3 | 89.9 | 8.5 | 215 | 165 |
| Comparative Example 3 | 88.1 | 15.2 | 83.5 | 19.8 | 141 | 188 |
| Comparative Example 4 | 88.9 | 13.2 | 90.8 | 17.2 | 172 | 231 |
| Comparative Example 5 | 86.1 | 20.9 | 82.1 | 21.4 | 301 | 180 |

Referring to Table 1 above, it may be seen that the lithium secondary batteries of Examples 1 to 4 according to the present invention have excellent high-temperature cycle performance and high-temperature storage performance, significantly reduced Fe elution amount, and less HF generation amount, so that the anion stabilization in the non-aqueous electrolyte is achieved, compared to the lithium secondary batteries of Comparative Examples 1 to 5.

## Claims

1. A lithium secondary battery comprising:
a positive electrode;
a negative electrode;
a separator; and
a non-aqueous electrolyte,
wherein the positive electrode comprises a positive electrode active material,
the positive electrode active material comprises lithium iron phosphate particles,
the non-aqueous electrolyte comprises a lithium salt, an organic solvent, and an additive,
the additive comprises an oligomer containing a repeating unit derived from a monomer represented by Formula 1 below, a repeating unit derived from a monomer represented by Formula 2 below, and a repeating unit derived from a monomer represented by Formula 3 below, and
a weight average molecular weight Mw of the oligomer is 5,000 g/mol to 25,000 g/mol: 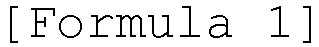 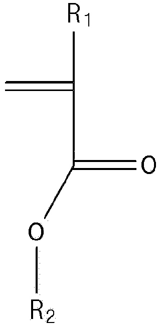
wherein, in Formula 1 above,
R₁ is hydrogen or an alkyl group of 1 to 3 carbon atoms, and
R₂ is an alky group having 1 to 20 carbon atoms, 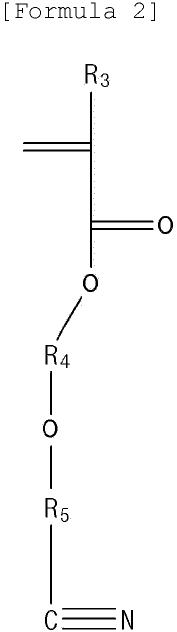
wherein, in Formula 2 above,
R₃ is hydrogen or an alkyl group of 1 to 3 carbon atoms, and
R₄ and R₅ are each independently an alkylene group having 1 to 10 carbon atoms, and 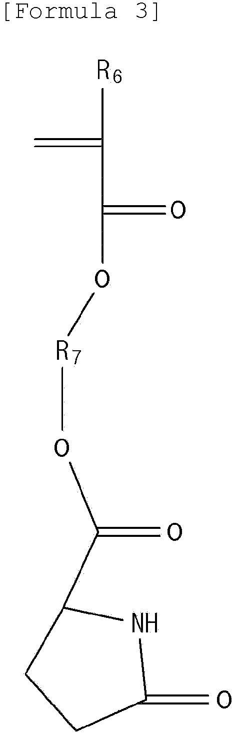
wherein, in Formula 3 above,
R₆ is hydrogen or an alkyl group having 1 to 3 carbon atoms, and
R₇ is an alkylene group having 1 to 10 carbon atoms.

2. The lithium secondary battery of claim 1, wherein in Formula 1 above, R₁ is hydrogen or an alkyl group of 1 to 10 carbon atoms,
in Formula 2 above, R₄ and R₅ are each independently an alkylene group having 1 to 7 carbon atoms, and
in Formula 3 above, R₇ is an alkylene group having 1 to 7 carbon atoms.

3. The lithium secondary battery of claim 1, wherein in Formula 1 above, R₁ is hydrogen or an alkyl group of 1 to 7 carbon atoms,
in Formula 2 above, R₄ and R₅ are each independently an alkylene group having 1 to 5 carbon atoms, and
in Formula 3 above, R₇ is an alkylene group having 1 to 5 carbon atoms.

4. The lithium secondary battery of claim 1, wherein the oligomer is an oligomer represented by Formula 4 below: 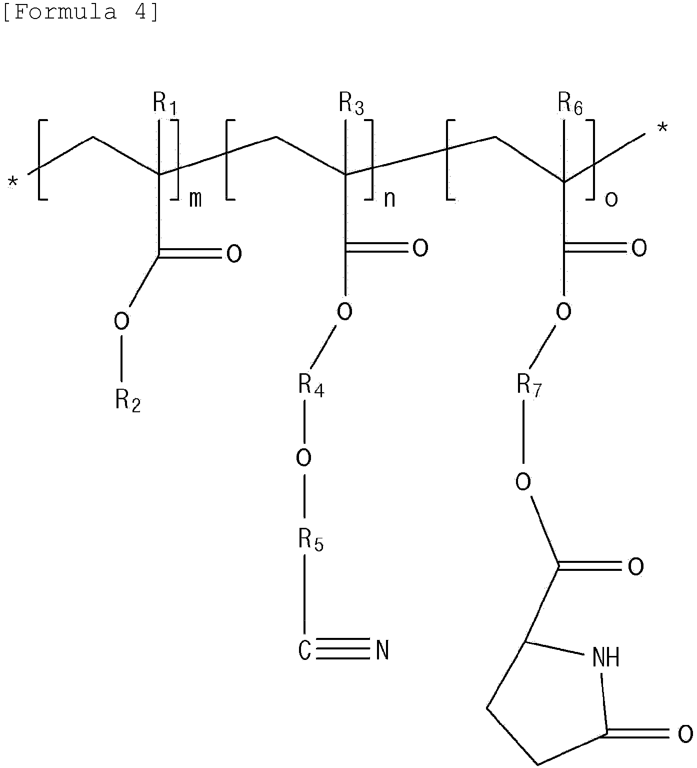
wherein, in Formula 4 above,
R₁, R₃, and R₆ are each independently hydrogen or an alkyl group having 1 to 3 carbon atoms,
R₂ is an alky group having 1 to 20 carbon atoms,
R₄, R₅ and R₇ are each independently an alkylene group of 1 to 10 carbon atoms,
m is a number of moles of 0.1 to 30,
n is a number of moles of 0.1 to 80, and
o is a number of moles of 0.1 to 80.

5. The lithium secondary battery of claim 1, wherein the oligomer is at least one selected from the group consisting of oligomers represented by Formula 4-1 and Formula 4-2 below: 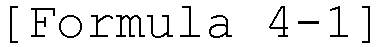 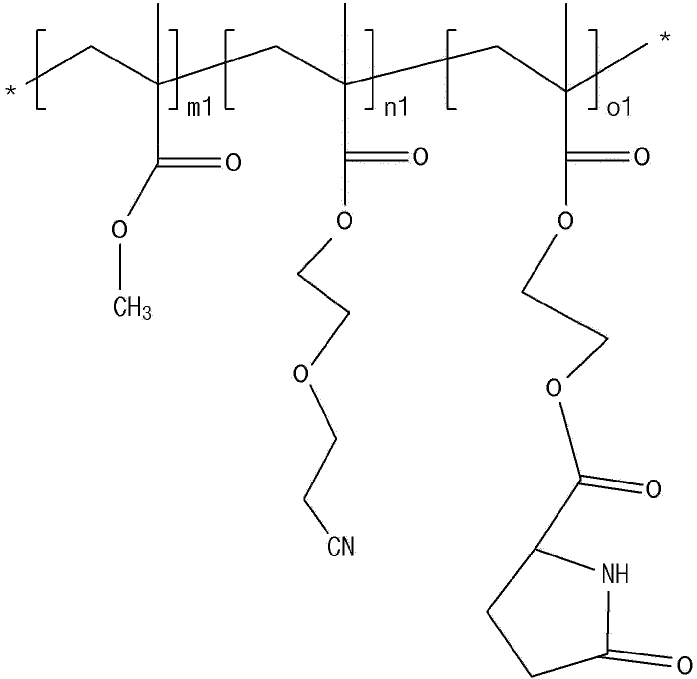
wherein, in Formula 4-1 above,
m1 is a number of moles of 0.1 to 30,
n1 is a number of moles of 0.1 to 80, and
o1 is a number of moles of 0.1 to 80, 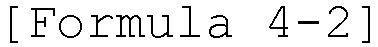 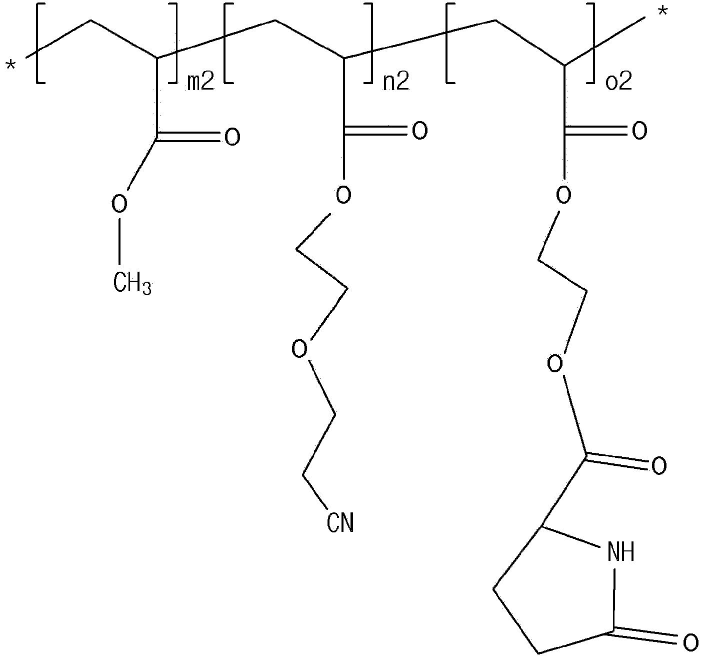 wherein, in Formula 4-2 above,
m2 is a number of moles of 0.1 to 30,
n2 is a number of moles of 0.1 to 80, and
o2 is a number of moles of 0.1 to 80.

6. The lithium secondary battery of claim 1, wherein the oligomer is contained in an amount of 0.1 wt% to 25 wt% in the non-aqueous electrolyte.

7. The lithium secondary battery of claim 1, wherein the additive comprises at least one additional additive selected from the group consisting of a halo gen-substituted or unsubstituted carbonate-based compound, a sultone-based compound, a sulfate-based compound, a phosphate- or phosphite-based compound, a borate-based compound, a nitrile-based compound, an amine-based compound, a silane-based compound, and a lithium salt-based compound.

8. The lithium secondary battery of claim 1, wherein the organic solvent comprises a cyclic carbonate-based organic solvent and a linear carbonate-based organic solvent.

9. The lithium secondary battery of claim 8, wherein the cyclic carbonate-based organic solvent comprises ethylene carbonate, and
the linear carbonate-based organic solvent comprises ethyl methyl carbonate and dimethyl carbonate.

10. The lithium secondary battery of claim 1, wherein the lithium iron phosphate particles comprise a compound represented by Formula A below:
[Formula A] Li₁₊ₐFe₁₋ₛMₛ(PO_{4-b})X_{b}
wherein, in Formula A above, M is at least one element selected from among Co, Ni, Al, Mg, Ti, and V; X is F, S, or N; 0≤s≤0.5; -0.5≤a≤0.5; and 0≤b≤0.1.

11. The lithium secondary battery of claim 1, wherein the positive electrode active material further comprises a carbon coating layer positioned on the lithium iron phosphate particle.
